# EUROPEAN PATENT SPECIFICATION

(11) **EP 3 890 991 B1**
(45) Date of publication and mention of the grant of the patent: **17.04.2024**
(21) Application number: 19835482.1
(22) Date of filing: 05.12.2019
(51) Int. Cl.: B60B 1/00, B60B 1/04

(54) **NIPPLE FOR SPOKED WHEELS WITH TUBELESS TYRES AND SPOKED WHEEL ASSEMBLED WITH SUCH NIPPLES**
NIPPEL FÜR SPEICHENRÄDER MIT SCHLAUCHLOSEN REIFEN UND MIT SOLCHEN NIPPELN MONTIERTES SPEICHENRAD
MAMELON POUR ROUES À RAYONS À PNEUS SANS CHAMBRE À AIR ET ROUE À RAYONS ASSEMBLÉE AVEC DE TELS MAMELONS

(30) Priority: 07.12.2018 IT 201800010896
(43) Date of publication of application: 13.10.2021
(73) Proprietor: Alpina Raggi S.P.A., 23871 Lomagna (LC) (IT)
(72) Inventor: CAPPELLOTTO, Guido, 20043 Arcore (MI) (IT)
(74) Representative: Cantaluppi, Stefano
(86) International application number: PCT/IB2019/060474
(87) International publication number: WO 2020/115693

(56) References cited:
- EP-A1- 1 926 606
- WO-A1-2008/077860
- US-A1- 2013 181 503

## Description

The subject matter of the invention concerns a specially designed nipple for the assembly of spoked wheels with tubeless tyres and a wheel assembled with such nipples.

A nipple having such characteristics is known from the applicant's current production and from IT 102016000067069 or EP1926606.

Nipples with these characteristics are particularly suited for the assembly of tubeless spoked wheels, particularly wheels for competition motorcycles both on- and off-road. In fact, these wheels have a problem of continuous resilient deformations resulting from the high stresses to which they are subjected. Similar deformations are transmitted with stress peaks to the rim/spoke/nipple assembly, which deformations, if not properly compensated for, can cause broken spokes due to mechanical fatigue.

The solution to this problem offered by EP'606 consists in a sliding mechanical coupling between the rim and nipple such that the nipple can move in its housing made in the rim with an alternating movement of the cylinder/piston type when the spoke is under peak load.

It has been found, however, that this coupling can cause drawbacks both as a result of damage to the O-rings forming the seal between the nipple and its housing in the rim and as a result of drawing in dust and dirt which over time compromises the system's pneumatic sealing ability. Moreover, when the bikes are washed after a competition or after normal use, perhaps with highpressure washing lances, highly undesirable problems of leakage between the nipple and the relative seals can occur. Figure 1 in this document shows a necking in the intermediate part of the nipple. This necking is a manoeuvring key obtained by flattening two opposing faces of the nipple and is not suitable for retaining, even temporarily, any of the nipple O-rings when inserting the nipple into the corresponding seat in the rim. In fact, the flattening does not affect the visible surface or the opposing surface in the Figure, which have a constant diameter equal to that of the shaft.

The solution offered by IT'069 proposes the use of a double O-ring seal with the sliding ability of the nipple in the rim seat being limited between two shoulders, one of which is composed of a toroidal resilient element such as a helical spring closed to form a ring around itself.

The wheel is assembled by inserting the spokes into the hub, applying the toroidal resilient element onto the shaft of the spokes, inserting the nipples into the appropriate seats in the rim and then screwing the nipples onto the corresponding spokes. The toroidal resilient elements are then slid along the spoke in order to be fitted into the corresponding groove on the body of the nipple where they perform the function of a second shoulder to hold the nipple in its seat, even if the spoke should break, and prevent the sudden consequent deflation of the tyre.

However, once the wheel has been assembled, it may be that one or more spokes lack the resilient element designed to form the second shoulder. In this case, an extraordinary assembly operation is required in order to remove the nipple involved, re-insert the toroidal element, re-fit the nipple and then fit the second shoulder into the operative seat of the nipple. In the case of highly automated assemblies of wheels, it is even possible that one or more nipples are left without the second shoulder, thus compromising the reliability of the wheel. In any case, assembly of the wheel requires a significant manual intervention at the very least to insert the resilient element onto the spoke and then move it into its seat on the nipple. Nipples and toroidal resilient elements must also be supplied separately and handled separately, which complicates automated production and, more generally, the assembly of the wheels.

WO2008/077860 describes a nipple with a resilient shoulder that can be removed during the stage of inserting the nipple into the rim seat. In this case too, no arrangement is provided on the nipple to hold this shoulder thereon before it is placed in the operative seat.

US2013/181503 in turn describes a nipple which is unsuitable for application onto tubeless , since it has no pneumatic sealing means at the rim seat.

The problem addressed by the present invention is to provide a nipple for spoked wheels and a wheel equipped therewith that are structurally and operationally designed to overcome the drawbacks that exist with reference to the cited prior art.

In practice, the aim of this invention is to provide a nipple that is completely ready for assembly onto the rim with no need to separately prepare and separately apply other elements which, due to their size and structure, might be difficult to handle or might be subject to potential loss with the consequent risk of compromising the wheel assembly operation.

Providing a nipple that includes within it all of the components needed to fit it safely and effectively onto the wheel avoids the drawbacks caused by the inaccuracy of the fitters and/or the loss of a component such as the second shoulder which, once the wheel has been assembled, can be a determining factor in guaranteeing the safety of the user.

The above-mentioned technical problem is solved by the invention by means of a nipple made in accordance with the accompanying claims.

The features and advantages of the invention will emerge more clearly from the following detailed description of a preferred but not exclusive embodiment thereof, given by way of non-limiting example, with reference to the accompanying drawings in which:
- Figures 1 and 2 are perspective views of a nipple made according to the present invention;
- Figure 3 is an enlarged detail of the nipple shown in Figure 2 in a variation thereof;
- Figures 4 and 5 are cross-sectional views of the nipple shown in Figure 1 and of an enlarged detail thereof;
- Figure 6 is a cross-sectional view of a detail of a spoked wheel fitted with the nipple shown in the preceding Figures.

In the Figures, 1 indicates a nipple made in accordance with the present invention.

The nipple 1 comprises a substantially cylindrical shaft 2, with an axis X, and an internally threaded blind axial hole 3.

The hole 3 has a mouth 4 that is open at one axial end of the shaft 2 and extends into the shaft to an extent less than its overall length.

A first manoeuvring key 4A is formed in the shaft 2 starting from the mouth 4; this manoeuvring key has a polygonal, preferably square, cross section.

A first cylindrical portion 5 extends between the manoeuvring key 4A and a second cylindrical portion 6 of the shaft 2, the second cylindrical portion 6 having a larger diameter than the diameter of the first portion 4.

The cylindrical portion 6 is terminated by a head 7 of the nipple that has a first shoulder 8 facing the cylindrical portion 6 and a second manoeuvring key 9, for example with a recessed profile (Phillips, Esagono, Torqx or suchlike) or with a polygonal plan, used to grip and rotate the nipple 1 from the external part of the wheel rim.

Along the cylindrical portion 6 there are three grooves 10, 11, 12; the first two (11, 12) are close to one another and the shoulder 8, while the third (10) is made in a substantially middle position along the axis of the shaft, in distal relation to the first shoulder 8.

The first two grooves have a U-shaped profile to accommodate respective sealing O-rings 14, 15. The third groove 12 has a half-round profile to accommodate, as an operative seat, a resilient element 16 such as, for example, a closed ring helical spring of a generally toroidal shape that serves as a second shoulder 17 of the nipple 1. Alternatively, it is envisaged that the helical spring be replaced by another resilient device whether with a closed ring or an open ring, provided that it is radially contractile so as to be able to seat itself in the operative seat 12 and in an auxiliary seat, as will be explained below.

Near the mouth 4, in the apical part of the shaft 2, axially opposite the head 7, there is a collar 18 capable of forming an auxiliary seat to accommodate the resilient element 16 until the nipple is completely assembled on the corresponding wheel spoke. This auxiliary seat is made in the nipple in a region thereof with a reduced diameter and such that, when the resilient element 16 is retained therein, the overall diameter of the resilient element is smaller than or equal to the diameter of the O-rings 14, 15 and preferably smaller than or equal to the diameter of the second cylindrical portion 6 of said nipple.

It will be appreciated that the region in which the collar 18 is located is not normally under stress, being the region immediately adjacent to the mouth 4 of the threaded hole 3, and therefore the necking created by the collar 18 causes no weakening of the nipple 1.

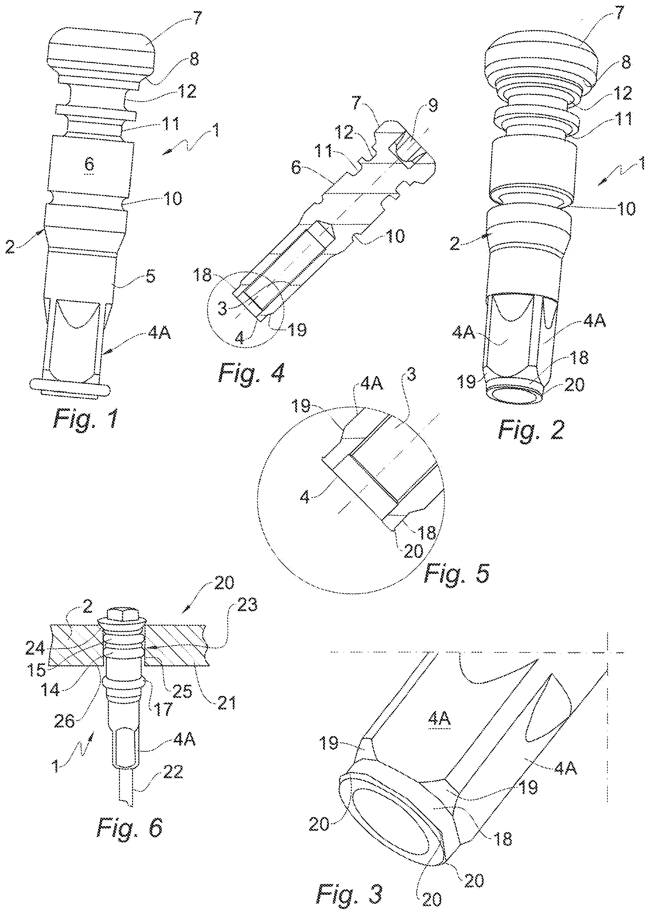

The auxiliary seat is delimited on parts that are axially opposed by a shoulder 19 against the manoeuvring key 4 and respectively by a radial lip 20, which has a continuous form in the solution in Figure 1 or a discontinuous form in the alternative solution in Figure 2.

In order to construct a spoked wheel using a rim 21 and spokes 22, the nipples 1 are positioned in respective housings or seats 23 in the rim 21 so as to converge towards the wheel's centre using the first manoeuvring key 4A.

Each housing 23 has an end 24 complementary to the shoulder 8, and a cylindrical portion 25 terminated with a surface 26. The nipple is inserted in the housing 23 until the shoulder 8 is received in the complementary end 24. In these conditions, the third groove 12 extends beyond the surface 26 so as to allow axial play of the nipple 1 in the respective seat 23. This axial play is limited by the shoulder 8 with the end 24 at one end and, at the opposite end, by the shoulder formed by the resilient ring 16 with the surface 26.

Whatever the axial movement of the nipple 1 in the seat 23, these shoulders limit its extension so that in any event both of the sealing rings 14, 15 remain in contact with the internal cylindrical surface 25 of the seat 23. In the preassembly phase of the nipple 1, the resilient element 16 is positioned and retained in the auxiliary seat formed by the collar 18. In this way, the nipple can be manipulated as an individual unit complete with the second shoulder even when the latter is not yet in fact positioned in its operative seat.

In this position, the resilient element 16 is in a radially contracted condition and its size is such as not to interfere with the housing 23 when the nipple is inserted therein. In practice, the outer diameter of the toroid formed by the resilient element 16 is smaller than or equal to the minimum inner diameter of the hole in the rim that constitutes the housing 23 of the nipple.

Once the nipple is inserted in its housing 23, the resilient element 16 is transferred from the collar 18 to the operative seat 14, in this way becoming effective as a second shoulder 17 to keep the nipple axially bound to the rim with limited capacity for axial movement.

The invention thus solves the proposed problem and offers numerous advantages including the union of a structure capable of offering optimum resistance to fatigue combined with a perfect pneumatic seal in any circumstance, the possibility to manipulate and preassemble all of the nipple components in a single manoeuvre, but without compromising their resistance, and eliminating wheel assembly faults caused by a lack of the second shoulder.

## Claims

1. A nipple (1) for tubeless spoked wheels including an axially extending shaft (2), a first and a second shoulder (8,17) on said shaft (2) spaced axially from each other, wherein at least one of said shoulders (17) is removable from an operative seat (10) on the shaft (2) of the nipple (1) to allow the insertion of the nipple (1) into a respective housing (23) and resettable when inserted to retain the nipple (1) in said housing (23), said nipple (1) being shaped in a region between said first shoulder (8) and said second shoulder (17) when mounted in order to be equipped with at least one sealing ring (14,15) and further comprising an auxiliary seat (18) on said nipple (1) for housing said second shoulder (17) when removed from the operative seat (10), said auxiliary seat (18) being made in the nipple (1) in the region thereof with a reduced diameter, **characterized in** the said auxiliary seat (18) is made such that, when a resilient element (16) serving as said second shoulder (17) is retained therein, the overall diameter of the resilient element (16) is smaller than or equal to the diameter of said sealing rings (14,15) assembled on the nipple (1).

2. A nipple (1) according to claim 1, wherein said auxiliary seat (18) and said second shoulder (17) have a shape such that when said second shoulder (17) is housed in said auxiliary seat (18), said nipple is freely insertable in operative position in the respective housing while it is retained in said housing between said first and second shoulders (8,17) when said nipple is installed in operating position and said second shoulder is installed in the respective operative seat (10).

3. A nipple (1) according to either claim 1 or claim 2, wherein said operative seat (10) is a groove formed on the shaft (2) of the nipple in an intermediate position between a mouth of the nipple (20) and the first shoulder (8).

4. A nipple (1) according to claim 3, wherein the second shoulder (17) is a radially contractile resilient element removably nested in said groove (10).

5. A nipple (1) according to claim 4, wherein the resilient element (16) is a helical spring (17) closed on itself.

6. A nipple (1) according to one or more of the preceding claims, in which the auxiliary seat (18) is formed in an apical portion of the nipple opposite to the first shoulder (8).

7. A nipple (1) according to claim 6, wherein the auxiliary seat comprises a collar (18) formed on the shaft of the nipple between the mouth (20) of the same and a manoeuvring key (4A).

8. A nipple (1) according to claim 7, wherein the collar is delimited on parts axially opposed by a shoulder (19) against the manoeuvring key (4A) and respectively by a radial lip (20).

9. A nipple (1) according to claim 8, in which the radial lip (19) is discontinuous.

10. A spoked wheel including a hub, a plurality of spokes (22) interconnecting said hub to a rim (2) and a corresponding plurality of nipples (1) arranged in respective housings of the rim to connect to each other the rim and respective spokes, wherein said nipples (1) are in accordance with one or more of the preceding claims and the housings on the rim are sized to air-tightly receive the shaft of the nipples and to retain the nipples (1) in their respective housings in an anti-loss manner but with the possibility of limited axial sliding between said shoulders.

11. Wheel according to claim 10, wherein the housings (23) of the nipples (1) on the rim have a size such as to allow free seating of the nipple (1) in the housing (23) when the second shoulder (17) is mounted in the auxiliary seat (18) and interfere with the housing (23) when the second shoulder (17) is mounted in the operative seat (10).

12. Method of assembly of a spoked wheel according to claim 10 or claim 11 wherein said nipples (1) are initially inserted in the respective housings (23) of the rim with said removable shoulder (17) housed in said auxiliary seat (18) and said removable shoulder (17) is therefore transferred from the auxiliary seat (18) to the operative seat (10) to hold the corresponding nipple bound in the respective housing (23).

## Patentansprüche

1. Nippel (1) für schlauchlose Speichenräder mit einem sich axial erstreckenden Schaft (2), einer ersten und einer zweiten Schulter (8, 17) auf dem Schaft (2), die axial voneinander beabstandet sind, wobei zumindest eine der Schultern (17) von einem Wirksitz (10) am Schaft (2) des Nippels (1) entfernbar ist, um das Einsetzen des Nippels (1) in eine entsprechende Aufnahme (23) zu ermöglichen und nach dem Einsetzen zurücksetzbar ist, um den Nippel (1) in der Aufnahme (23) zu halten, wobei der Nippel (1) im montierten Zustand in einem Bereich zwischen der ersten Schulter (8) und der zweiten Schulter (17) ausgebildet ist, um mit zumindest einem Dichtungsring (14,15) ausgestattet zu sein, und ferner einen Hilfssitz (18) am Nippel (1) zur Aufnahme der zweiten Schulter (17) aufweist, wenn er vom Wirksitz (10) entfernt ist, wobei der Hilfssitz (18) im Bereich des Nippels (1) mit einem verringertem Durchmesser ausgebildet ist, **dadurch gekennzeichnet, dass** der Hilfssitz (18) derart ausgebildet ist, dass, wenn ein elastisches Element (16), das als zweite Schulter (17) dient, darin gehalten wird, der Gesamtdurchmesser des elastischen Elements (16) kleiner als oder gleich dem Durchmesser der am Nippel (1) montierten Dichtungsringe (14,15) ist.

2. Nippel (1) nach Anspruch 1, wobei der Hilfssitz (18) und die zweite Schulter (17) eine Form aufweisen, so dass, wenn die zweite Schulter (17) im Hilfssitz (18) aufgenommen ist, der Nippel in der Wirkposition frei in die entsprechende Aufnahme einsetzbar ist, während er in der Aufnahme zwischen der ersten und der zweiten Schulter (8, 17) gehalten wird, wenn der Nippel in der Wirkposition eingebaut ist und die zweite Schulter im jeweiligen Wirksitz (10) eingebaut ist.

3. Nippel (1) nach Anspruch 1 oder Anspruch 2, wobei der Wirksitz (10) eine Nut ist, die auf dem Schaft (2) des Nippels in einer Zwischenposition zwischen einer Öffnung des Nippels (20) und der ersten Schulter (8) ausgebildet ist.

4. Nippel (1) nach Anspruch 3, wobei die zweite Schulter (17) ein radial kontraktiles elastisches Element ist, das entfernbar in der Nut (10) aufgenommen ist.

5. Nippel (1) nach Anspruch 4, wobei das elastische Element (16) eine in sich geschlossene Schraubenfeder (17) ist.

6. Nippel (1) nach einem oder mehreren der vorhergehenden Ansprüche, wobei der Hilfssitz (18) in einem apikalen Abschnitt des Nippels gegenüber der ersten Schulter (8) ausgebildet ist.

7. Nippel (1) nach Anspruch 6, wobei der Hilfssitz einen Kragen (18) aufweist, der auf dem Schaft des Nippels zwischen der Öffnung (20) desselben und einem Betätigungskeil (4A) ausgebildet ist.

8. Nippel (1) nach Anspruch 7, wobei der Kragen an axial gegenüberliegenden Teilen durch eine Schulter (19) gegen den Betätigungskeil (4A) bzw. durch eine radiale Lippe (20) begrenzt ist.

9. Nippel (1) nach Anspruch 8, wobei die radiale Lippe (19) diskontinuierlich ist.

10. Speichenrad mit einer Nabe, einer Mehrzahl von Speichen (22), die die Nabe mit einer Felge (2) verbinden, und einer entsprechenden Mehrzahl von Nippeln (1), die in jeweiligen Aufnahmen der Felge angeordnet sind, um die Felge und die jeweiligen Speichen miteinander zu verbinden, wobei die Nippel (1) einem oder mehreren der vorhergehenden Ansprüche entsprechen und die Aufnahmen auf der Felge dimensioniert sind, um den Schaft der Nippel luftdicht aufzunehmen und um die Nippel (1) in ihren jeweiligen Aufnahmen verlustsicher zu halten, aber mit der Möglichkeit einer begrenzten axialen Verschiebung zwischen den Schultern.

11. Rad nach Anspruch 10, wobei die Aufnahmen (23) der Nippel (1) auf der Felge eine Größe aufweisen, um einen freien Sitz des Nippels (1) in der Aufnahme (23) zu ermöglichen, wenn die zweite Schulter (17) im Hilfssitz (18) montiert ist und die Aufnahme (23) beeinträchtigt, wenn die zweite Schulter (17) im Wirksitz (10) montiert ist.

12. Verfahren zur Montage eines Speichenrades nach Anspruch 10 oder Anspruch 11, wobei die Nippel (1) zunächst in die jeweiligen Aufnahmen (23) der Felge eingesetzt werden, wobei die entfernbare Schulter (17) im Hilfssitz (18) aufgenommen ist, und die entfernbare Schulter (17) daher vom Hilfssitz (18) auf den Wirksitz (10) übertragen wird, um den entsprechenden Nippel zu halten, der in der jeweiligen Aufnahme (23) befestigt ist.

## Revendications

1. Embout (1) pour roues à rayons sans chambre à air comprenant une tige à extension axiale (2), un premier et un second épaulement (8, 17) sur ladite tige (2) espacés axialement l'un de l'autre, dans lequel au moins l'un desdits épaulements (17) est amovible à partir d'un siège opérationnel (10) sur la tige (2) de l'embout (1) pour permettre l'insertion de l'embout (1) dans un logement (23) respectif et réinitialisable lorsqu'il est inséré afin de retenir l'embout (1) dans ledit logement (23), ledit embout (1) étant formé dans une région entre ledit premier épaulement (8) et ledit second épaulement (17), lorsqu'il est monté afin d'être équipé d'au moins une bague d'étanchéité (14, 15) et comprenant en outre un siège auxiliaire (18) sur ledit embout (1) pour loger ledit second épaulement (17) lorsqu'il est retiré du siège opérationnel (10), ledit siège auxiliaire (18) étant réalisé dans l'embout (1) dans une région de ce dernier avec un diamètre réduit, **caractérisé en ce que** ledit siège auxiliaire (18) est réalisé de sorte que, lorsqu'un élément résilient (16) faisant office dudit second épaulement (17) est retenu dans ce dernier, le diamètre global de l'élément résilient (16) est inférieur ou égal au diamètre desdites bagues d'étanchéité (14, 15) assemblées sur l'embout (1).

2. Embout (1) selon la revendication 1, dans lequel ledit siège auxiliaire (18) et ledit second épaulement (17) ont une forme de sorte que lorsque ledit second épaulement (17) est logé dans ledit siège auxiliaire (18), ledit embout peut être librement inséré en position opérationnelle dans le logement respectif alors qu'il est retenu dans ledit logement entre lesdits premier et second épaulements (8, 17), lorsque ledit embout est installé dans la position opérationnelle et que ledit second épaulement est installé dans le siège opérationnel (10) respectif.

3. Embout (1) selon la revendication 1 ou la revendication 2, dans lequel ledit siège opérationnel (10) est une rainure formée sur la tige (2) de l'embout dans une position intermédiaire entre une bouche de l'embout (20) et le premier épaulement (8).

4. Embout (1) selon la revendication 3, dans lequel le second épaulement (17) est un élément résilient radialement contractile emboîté, de manière amovible, dans ladite rainure (10).

5. Embout (1) selon la revendication 4, dans lequel l'élément résilient (16) est un ressort hélicoïdal (17) fermé sur lui-même.

6. Embout (1) selon une ou plusieurs des revendications précédentes, dans lequel le siège auxiliaire (18) est formé dans une partie apicale de l'embout opposée au premier épaulement (8).

7. Embout (1) selon la revendication 6, dans lequel le siège auxiliaire comprend un collier (18) formé sur la tige de l'embout entre la bouche (20) de ce dernier et une clé de manoeuvre (4A).

8. Embout (1) selon la revendication 7, dans lequel le collier est délimité sur des parties axialement opposées par un épaulement (19) contre la clé de manoeuvre (4A) et respectivement par une lèvre radiale (20).

9. Embout (1) selon la revendication 8, dans lequel la lèvre radiale (19) est discontinue.

10. Roue à rayons comprenant un moyeu, une pluralité de rayons (22) interconnectant ledit moyeu à une jante (2) et une pluralité correspondante d'embouts (1) agencés dans des logements respectifs de la jante pour raccorder entre eux la jante et les rayons respectifs, dans laquelle lesdits embouts (1) sont selon une ou plusieurs des revendications précédentes et les logements sur la jante sont dimensionnés pour recevoir, de manière étanche à l'air, la tige des embouts et pour retenir les embouts (1) dans leurs logements respectifs de façon anti-perte mais avec la possibilité de coulissement axial limité entre lesdits épaulements.

11. Roue selon la revendication 10, dans laquelle les logements (23) des embouts (1) sur la jante ont une taille permettant l'installation libre de l'embout (1) dans le logement (23) lorsque le second épaulement (17) est monté dans le siège auxiliaire (18) et interfèrent avec le logement (23) lorsque le second épaulement (17) est monté dans le siège opérationnel (10).

12. Procédé pour assembler une roue à rayons selon la revendication 10 ou la revendication 11, dans lequel lesdits embouts (1) sont insérés initialement dans les logements (23) respectifs de la jante avec ledit épaulement amovible (17) logé dans ledit siège auxiliaire (18) et ledit épaulement amovible (17) est par conséquent transféré du siège auxiliaire (18) au siège opérationnel (10) afin de maintenir l'embout correspondant lié dans le logement (23) respectif.
